# FASCICULE DE BREVET EUROPEEN

(11) **EP 0 626 230 B1**
(45) Date de publication et mention de la délivrance du brevet: **25.06.1997**
(21) Numéro de dépôt: 94400937.2
(22) Date de dépôt: 29.04.1994
(51) Int. Cl.: B23K 26/00, B23K 37/047, B23Q 3/06

(54) **Dispositif de guidage et de transfert d'au moins deux flans de tôle préalablement accostés bord à bord et installation de soudage comportant un tel dispositif de guidage et de transfert**
Vorrichtung zum Führen und Fördern von mindestens zwei angedockenden Blechen, und Schweissanlage mit solcher Vorrichtung
Device for guiding and transporting at least two metal sheets and system with such a device

(30) Priorité: 28.05.1993 FR 9306466
(43) Date de publication de la demande: 30.11.1994
(73) Titulaire: SOLLAC, F-92800 Puteaux (FR)
(72) Inventeur: Peru, Gilles, F-59240 Dunkerque (FR); Sauvage, Francis, F-59240 Dunkerque (FR); Voituriez, Henry, F-59240 Dunkerque (FR)
(74) Mandataire: Lanceplaine, Jean-Claude

(56) Documents cités:
- EP-A- 0 189 806
- EP-A- 0 299 358
- EP-A- 0 549 389
- US-A- 3 475 579

## Description

La présente invention a pour objet un dispositif de guidage et de transfert d'au moins deux flans de tôle préalablement accostés bord à bord pour une installation de soudage en continu au moyen d'un faisceau laser.

La présente invention a également pour objet une installation de soudage en continu au moyen d'un faisceau laser d'au moins deux flans de tôle à souder bord à bord, munie d'un tel dispositif de guidage et de transfert.

Le soudage au moyen d'un faisceau laser de deux flans de tôle a trouvé un débouché industriel important notamment dans la production de pièces raboutées et soudées par exemple pour l'industrie automobile.

En effet, deux flans de tôle raboutés, c'est à dire assemblés bord à bord sans recouvrement et soudés au moyen d'un faisceau laser, conservent toute leur faculté d'emboutissabilité.

Les flans de tôle peuvent être de différentes formes géométriques et/ou de différents épaisseurs, voire posséder des nuances d'acier différentes.

A cet effet, il est connu pour souder deux flans de tôle bord à bord de les joindre et de soumettre le plan de joint desdits flans de tôle à un faisceau laser en faisant défiler en continu ces flans de tôle perpendiculairement à l'axe dudit faisceau.

D'une manière générale ces installations de soudage comportent une zone de positionnement latéral de l'un des flans de tôle par rapport à l'axe du faisceau, puis une zone d'accostage des deux flans de tôle bord à bord et enfin une zone d'entraînement de ces flans au-dessous du faisceau laser en maintenant bord à bord les deux flans de tôle.

A cet effet, on connaît différents dispositifs de maintien des flans de tôle dans la zone de soudage qui utilisent pour chaque flan de tôle des systèmes de bridage vertical constitués par exemple par des rouleaux.

Mais, ce genre de dispositif de maintien ne permet pas de souder ensemble des flans de tôle de différentes formes géométriques.

On connaît également un dispositif de maintien qui comporte des paires de palettes, l'une à côté de l'autre, portant chacune au moins un flan de tôle.

Les flans de tôle sont fixés par exemple par serrage sur les palettes.

Ce dispositif comporte également, au niveau de la zone de soudage, des rouleaux de pression inclinés pour tenir par le haut les flans de tôle.

Ce dispositif présente un inconvénient qui réside principalement dans le fait qu'il ne permet pas de minimiser le jeu entre les bords à souder des deux flans de tôle si bien qu'au moment du soudage, le jeu augmente à cause de la dilatation thermique de la zone soudée.

Le document EP-A1-0 549 389 qui représente l'état de la technique selon l'Article 54(3) de la CBE décrit un dispositif de guidage et de transfert conforme au préambule de la revendication 1.

La présente invention a pour but d'éviter ces inconvénients en proposant un dispositif de guidage et de transfert d'au moins deux flans de tôle et une installation munie de ce dispositif permettant de contrôler la pression latérale sur les bords à souder des deux flans de tôle au cours de leur déplacement pendant toute l'opération de soudage.

L'invention a donc pour objet un dispositif de guidage et de transfert d'au moins deux flans de tôle préalablement accostés bord à bord pour former un plan de joint, dans une installation de guidage en continu au moyen d'un faisceau laser, du type comprenant deux ensembles de support et de transfert des flans de tôle en direction du faisceau laser, disposés chacun de part et d'autre du plan de joint et déplaçables en synchronisation l'un avec l'autre, chaque ensemble de support et de transfert étant formé, d'une part, d'une chaîne à patins articulés constituant une surface de contact sensiblement continue avec la face inférieure des flans de tôle correspondant et, d'autre part, d'une chaîne supérieure à patins articulés disposée en regard de la chaîne inférieure à patins articulés correspondante et destinée à coopérer avec cette dernière pour déplacer les flans de tôle par adhérence en direction du faisceau laser, caractérisé en ce qu'au moins un des deux ensembles de support et de transfert est orienté en oblique en direction du plan de joint dans le sens de transfert des flans de tôle pour exercer une pression latérale sur lesdits flans de tôle à souder l'un contre l'autre et en direction de leurs bords à souder.

Selon d'autres caractéristiques de l'invention :
- l'un des deux ensembles de support et de transfert est orienté en direction du plan de joint dans le sens de transfert des flans de tôle et l'autre desdits ensembles est parallèle au plan de joint des flans de tôle,
- chacun des deux ensembles de support et de transfert est orienté en direction du plan de joint des flans de tôle,
- chaque ensemble de transfert est muni de moyens de bridage sous effort vertical des flans de tôles agissant sur les chaînes à patins articulés dudit ensemble correspondant,
- les moyens de bridage sont formés par des rouleaux supportant la chaîne inférieure à patins articulés, l'axe de rotation desdits rouleaux étant perpendiculaire au sens de déplacement de ladite chaîne inférieure à patins articulés et horizontal et par des rouleaux d'appui de la chaîne supérieure à patins articulés, l'axe de rotation desdits rouleaux d'appui étant perpendiculaire au sens de déplacement de ladite chaîne à patins articulés et horizontal,
- au moins trois rouleaux sont en contact simultanément avec un patin de chaque chaîne à patins,
- chaque chaîne à patins articulés forme une boucle dans un plan perpendiculaire auxdits flans de tôle et comportent des moyens d'entraînement en rotation,
- chaque patin des chaînes à patins articulés comportent sur sa face en contact avec les flans de tôle correspondant une couche d'un matériau assurant un coefficient de frottement suffisant pour créer l'adhérence avec lesdits flans de tôle correspondant, par exemple un polymère.

L'invention a également pour objet une installation de soudage bord à bord en continu d'au moins deux flans de tôle au moyen d'un faisceau laser, du type comportant :
- une zone d'accostage des flans de tôle et de mise en référence du plan de joint desdits flans de tôle dans l'axe du faisceau laser,
- une zone de transfert des flans de tôle vers le faisceau laser et de maintien en référence des flans de tôles accostés,
- une zone de soudage desdits flans de tôle,
- et une zone d'évacuation des flans de tôle soudés,
caractérisée en ce que la zone de transfert et de maintien en référence des flans de tôle et la zone de soudage desdits flans de tôle comportent un dispositif tel que mentionné ci-dessus.

Selon d'autres caractéristiques de l'invention :
- la zone d'accostage des flans de tôle et de mise en référence du plan de joint desdits flans de tôle comporte deux ensembles de support et de transfert du flan de tôle en direction du faisceau laser, disposés chacun de part et d'autre du plan de joint et déplaçables en synchronisation l'un avec l'autre, lesdits ensembles étant formés de deux chaînes à patin articulés, l'une inférieure et l'autre supérieure et lesdites chaînes à patins articulés étant parallèles au plan de joint des flans de tôle,
- la zone d'évacuation des flans de tôle soudés comporte deux ensembles de support et de transfert des flans de tôle en direction du faisceau laser, disposés chacun de part et d'autre du plan de joint et déplaçables en synchronisation l'un avec l'autre, lesdits ensembles étant formés de deux chaînes à patins articulés, l'une inférieure et l'autre supérieure et lesdites chaînes à patins articulés étant parallèles au plan de joint des flans de tôle,
- les chaînes à patins articulés desdites zones sont formées chacune par une chaîne à patins articulés continue.

Les caractéristiques et avantages de l'invention apparaîtront au cours de la description qui va suivre, donné uniquement à titre d'exemple et faite en référence aux dessins annexés, dans lesquels :
- la Fig. 1 est une vue schématique de dessus d'un dispositif de guidage et de transfert d'au moins deux flans de tôle, conforme à l'invention,
- la Fig. 2 est une vue schématique en élévation d'un ensemble de support et de transfert des flans de tôle du dispositif représenté à la Fig. 1,
- la Fig. 3 est une vue en coupe selon la ligne 3-3 de la Fig. 2,
- la Fig. 4 est une vue schématique en élévation de plusieurs patins d'une chaîne à patins articulés,
- la Fig. 5 est une vue de dessus de plusieurs patins d'une chaîne à patins articulés,
- la Fig. 6 est une vue schématique de dessus d'une installation de soudage bord à bord en continu conforme à l'invention.

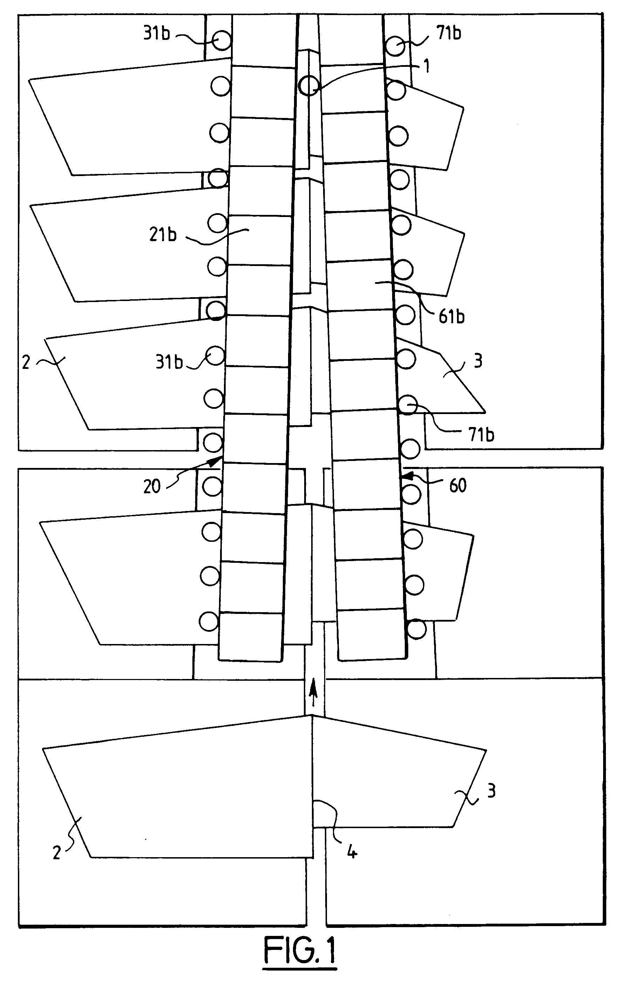

Le dispositif représenté schématiquement à la Fig. 1 est destiné au guidage et au transfert de plusieurs paires de flans de tôle 2 et 3 dans une installation de soudage bord à bord en continu desdits flans de tôle 2 et 3 au moyen d'un faisceau laser 1.

Les flans de tôles 2 et 3 peuvent être de différentes formes géométriques et/ou de différentes épaisseurs, voire posséder des nuances d'acier différentes, et sont destinés par exemple à l'industrie automobile ou aux industries utilisatrices de pièces semi-finies.

Les deux flans de tôle 2 et 3 de chaque paire sont accostés bord à bord pour former un plan de joint 4 et défilent en continu au dessous du faisceau laser 1 en vue de leur soudage.

Dans le but de garantir une bonne qualité de soudure, le positionnement des flans de tôle 2 et 3 doit satisfaire, dans la zone de soudage, à plusieurs exigences qui sont notamment la position relative des bords à souder par rapport à l'axe du faisceau laser 1 et la pression relative sur ces bords afin de contrôler et de réduire le jeu entre lesdits bords au cours du déplacement des flans de tôle 2 et 3.

A cet effet, le dispositif représenté sur les Figs. 1 à 3 comporte deux ensembles 20 et 60 de support et de transfert des flans de tôle 2 et 3 en direction du faisceau laser 1, disposés chacun de part et d'autre du plan de joint 4 et déplaçables en synchronisation l'un avec l'autre.

L'ensemble 20 de support et de transfert des flans de tôle 2 est formé, d'une part, d'une chaîne inférieure 21a à patins articulés constituant une surface de contact sensiblement continue avec la face inférieure des flans de tôle 2 correspondants et, d'autre part, d'une chaîne supérieure 21b à patins articulés disposée en regard de la chaîne inférieure 21a correspondante et destinée à coopérer avec cette dernière pour déplacer les flans de tôle 2 par adhérence en direction du faisceau laser 1.

La chaîne inférieure 21a à patins articulés forme une boucle dans un plan perpendiculaire aux flans de tôle 2 et 3 et est portée par une paire de roues 22a et 23a disposées chacunes à une extrémité de ladite chaîne inférieure 21a.

L'entraînement de la chaîne inférieure 21a est réalisé par exemple par un système moto-réducteur non représenté et relié à l'une des roues 22a ou 23a.

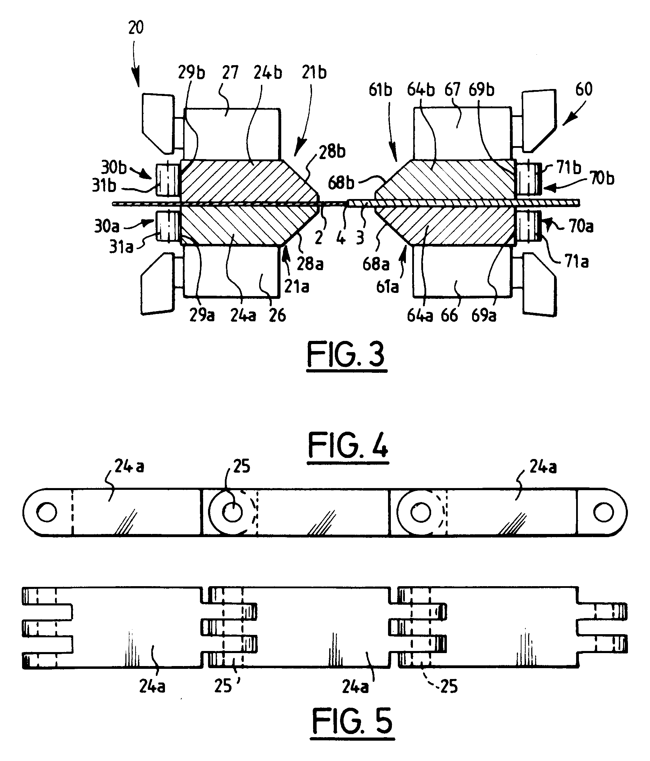

Comme représenté sur les Figs. 4 et 5, la chaîne inférieure 21a est composée de patins 24a de forme générale parallélépipèdique et articulés entre eux au moyen de tiges 25.

La chaîne supérieure 21b à patins articulés forme également une boucle dans un plan perpendiculaire au flan de tôle 2 et 3 et est portée par une paire de roue 22b et 23b disposées chacunes à une extrémité de ladite chaîne supérieure 21b.

L'entraînement de la chaîne supérieure 21b est réalisé par exemple par un système moto-réducteur non représenté et relié à l'une des roues 22b ou 23b.

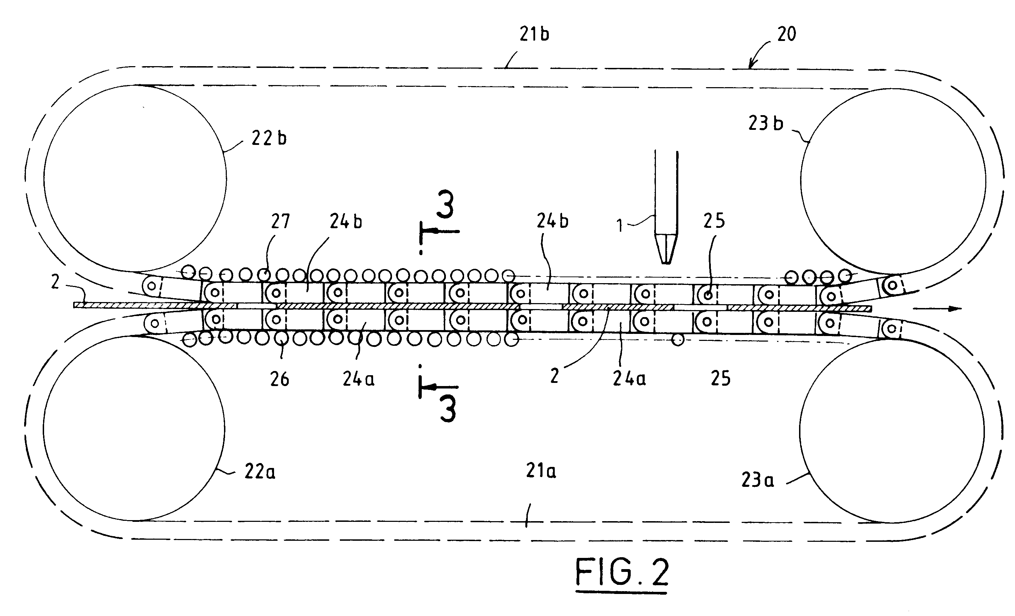

La chaîne supérieure 21b comprend des patins 24b de forme générale parallélépipèdique et articulés entre eux au moyen d'une tige 25 (Fig. 2).

L'ensemble 20 de support et de transfert des flans de tôle 2 est muni de moyens 26 et 27 de bridage sous effort vertical desdits flans de tôle 2 agissant sur les chaînes 21a et 21b à patins articulés.

Ces moyens de bridage sont formés, d'une part, par des rouleaux 26 supportant la chaîne inférieure 21a à patins articulés, l'axe de rotation desdits rouleaux 26 étant perpendiculaire au sens de déplacement de ladite chaîne inférieure 21a et horizontal et, d'autre part, par des rouleaux d'appui 27 de la chaîne supérieure 21b à patins articulés, l'axe de rotation desdits rouleaux 27 étant perpendiculaire au sens de déplacement de ladite chaîne supérieure 21b et horizontal.

Les rouleaux 26 cylindriques à génératrice droite sont libres en rotation et relativement rapprochés les uns des autres de telle sorte que la surface de la chaîne inférieure 21a à patins articulés en contact avec la surface inférieure des flans de tôle 2 détermine un plan de référence horizontal pour le positionnement desdits flans de tôle.

Les rouleaux 27 cylindriques à génératrice droite sont également libres en rotation et relativement rapprochés les uns des autres.

Au moins trois rouleaux 26 sont en contact avec chaque patin 24a de la chaîne inférieure 21a à patins articulés et au moins trois rouleaux 27 sont en contact avec chaque patin 24b de la chaîne supérieure 21b à patins articulés.

L'ensemble 60 de support et de transfert des flans de tôle 3 est identique à l'ensemble 20 de support et de transfert des flans de tôle 2.

Cet ensemble 60 est formé, d'une part, d'une chaîne inférieure 61a à patins articulés constituant une surface de contact sensiblement continue avec la face inférieure des flans de tôle 3 et, d'autre part, d'une chaîne supérieure 61b à patins articulés disposée en regard de la chaîne inférieure 61a et destinée à coopérer avec cette dernière pour déplacer les flans de tôle 3 par adhérence en direction du faisceau laser 1.

La chaîne inférieure 61a à patins articulés forme une boucle dans un plan perpendiculaire aux flans de tôle 2 et 3 et est portée par une paire de roues, non représentées, disposées chacunes à une extrémité de ladite chaîne inférieure 61a.

L'entraînement de la chaîne inférieure 61a à patins articulés est réalisé par exemple par un système moto-réducteur non représenté et relié à l'une desdites roues.

La chaîne inférieure 61a comprend des patins 64a (Fig. 3) de forme générale parallélépipèdique et articulés entre eux au moyen de tiges.

La chaîne supérieure 61b à patins articulés forme une boucle dans un plan perpendiculaire aux flans de tôle 2 et 3 et est portée par une paire de roues, non représentées, disposées chacunes à une extrémité de ladite chaîne supérieure 61b.

L'entraînement de la chaîne supérieure 61b est réalisé, par exemple par un système moto-réducteur non représenté et relié à l'une desdites roues.

La chaîne supérieure 61b comprend des patins 64b (Fig. 3) de forme générale parallélépipèdique et articulés entre eux aux moyens de tiges.

L'ensemble 60 de support et de transfert des flans de tôle 3 est muni de moyens 66 et 67 de bridage sous effort vertical des flans de tôle 3 agissant sur les chaînes 61a et 61b à patins articulés.

Ces moyens de bridage sont formés, d'une part, par des rouleaux 66 supportant la chaîne inférieure 61a à patins articulés, l'axe de rotation desdits rouleaux 66 étant perpendiculaire au sens de déplacement de ladite chaîne inférieure 61a et horizontal et, d'autre part, par des rouleaux d'appui 67 de la chaîne supérieure 61b, l'axe de rotation desdits rouleaux 67 étant perpendiculaire au sens de déplacement de ladite chaîne supérieure 61b et horizontal.

Les rouleaux 66 cylindriques à génératrice droite sont libres en rotation et relativement rapprochés les uns des autres de telle sorte que la surface de la chaîne inférieure 61a à patins articulés en contact avec la face inférieure des flans de tôle 3 détermine un plan de référence horizontal pour le positionnement desdits flans.

Au moins trois des rouleaux 66 sont en contact avec chaque patin 64a.

Les rouleaux 67 cylindriques à génératrice droite sont libres en rotation et relativement rapprochés les uns des autres.

Au moins trois rouleaux 67 sont en contact avec chaque patin 64b.

Comme représenté sur la Fig. 3, les patins 24a, 24b et 64a, 64b des chaînes 21a, 21b et 61a, 61b sont identiques et par exemple en acier.

La face de ces patins en contact avec les flans de tôle 2 ou 3 est recouverte d'une couche par exemple de polymère de façon à éviter tout glissement desdits patins avec lesdits flans de tôle.

Les patins 24a et 24b ménagent avec les patins opposés 64a et 64b, un espace suffisant pour le positionnement du dispositif de soudage au moyen du faisceau laser 1 et le soudage des bords des flans de tôles 2 et 3.

De plus, la face latérale 28a, 28b, 68a, 68b des patins respectivement 24a, 24b, 64a, 64b dirigée vers les bords à souder des flans de tôle 2 et 3 est biseautée tandis que la face opposée 29a, 29b, 69a, 69b est plane et verticale.

Ainsi, que représenté à la Fig. 1, les deux ensembles 20 et 60 formés respectivement par les chaînes à patins 21a, 21b et 61a, 61b à patins articulés sont orientés en direction du plan de joint 4 dans le sens de transfert des flans de tôle 2 et 3 pour exercer une pression latérale sur lesdits flans de tôle 2 et 3 l'un contre l'autre et en direction de leurs bords à souder.

Selon une variante, au moins un des deux ensembles 20 ou 60 est orienté en direction du plan de joint 4 dans le sens de transfert des flans de tôle 2 et 3 et l'autre desdits ensembles 20 ou 60 est parallèle au plan de joint 4 desdits flans de tôle 2 et 3.

Ainsi, l'un ou les deux ensembles 20 et 60 forment un angle avec le plan de joint 4 des flans de tôle 2 et 3 compris entre 1 et 3°.

L'orientation des chaînes à patins 21a, 21b, 61a et 61b par rapport au plan de joint 4 des flans de tôle 2 et 3 dépend de la pression latérale que l'on désire appliquer sur les bords à souder desdits flans de tôle 2 et 3.

Plus la pression latérale exercée sur les bords à souder des flans de tôle 2 et 3 est importante, plus l'orientation des chaînes à patins 21a, 21b, 61a et 61b par rapport au plan de joint 4 desdits flans de tôle 2 et 3 doit être importante et plus la pression verticale exercée par les rouleaux 26, 27, 66 et 67 sur lesdites chaînes à patins articulés doit être importante pour éviter le glissement des flans de tôle 2 et 3 entre les patins 24a, 24b, 64a et 64b.

Grâce à la pression latérale exercée sur les bords à souder des flans de tôle 2 et 3 par l'orientation de l'un ou des deux ensembles 20 et 60 et grâce à la pression verticale exercée sur les flans de tôles 2 et 3, le dispositif selon l'invention permet de contrôler le jeu entre les bords à souder des flans de tôle 2 et 3 au cours de leur déplacement pendant toute l'opération de soudage et d'éviter que les bords à souder s'écartent du fait de la dilatation desdits flans de tôle 2 et 3 lors de ce soudage.

Ces pressions latérales et verticales sont maintenues pendant le soudage des flans de tôle 2 et 3 et après ce soudage pendant le refroidissement du plan de joint ce qui permet d'améliorer les caractéristiques mécaniques du joint soudé ainsi obtenu.

Le dispositif selon l'invention peut également comporter des moyens supplémentaires de maintien en référence selon un plan vertical des bords à souder des flans de tôle 2 et 3 dans l'axe du faisceau laser.

Ces moyens supplémentaires de maintien en référence sont formés par deux séries de chemins de guidage respectivement 30a, 30b et 70a, 70b.

Comme représenté à la Fig. 3, le chemin de guidage 30a est formé par des galets 31a à axe vertical et libres en rotation, lesdits galets 31a étant en appui sur la surface latérale 29a des patins 24a de la chaîne inférieure 21a à patins articulés.

Le chemin de guidage 30b est formé par des galets 31b à axe vertical et libres en rotation, lesdits galets 31b étant en appui sur la surface latérale 29b des patins 24b de la chaîne supérieure 21b à patins articulés.

Par ailleurs, le chemin de guidage 70a est formé par des galets 71a à axe vertical et libres en rotation, lesdits galets 71a étant en appui sur la surface latérale 69a des patins 64a de la chaîne inférieure 61a à patins articulés.

Le chemin de guidage 70b est formé par des galets 71b à axe vertical et libres en rotation, lesdits galets 71b étant en appui sur la surface latérale 69b des patins 64b de la chaîne supérieure 61b à patins articulés.

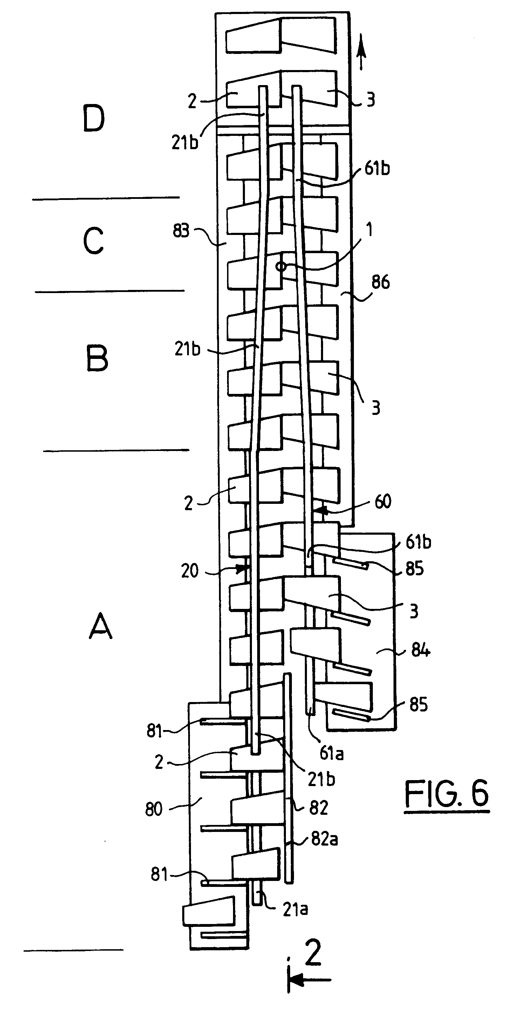

En se reportant maintenant à la Fig. 6, on va décrire une installation de soudage bord à bord en continu d'au moins deux flans de tôle 2 et 3 au moyen d'un faisceau laser 1 et comportant un dispositif de guidage et de transfert desdits flans de tôle 2 et 3 comme décrit ci-dessus.

Cette installation est destinée à l'accostage bord à bord et au soudage en continu au moyen du faisceau laser 1 successivement de plusieurs paires de flans de tôle 2 et 3 de différentes formes géométriques ou de différentes épaisseurs.

Les deux flans de tôle 2 et 3 de chaque paire sont placés bord à bord et défilent en continu au-dessous du faisceau laser 1 en vue de leur soudage.

Dans ce but, l'installation représentée à la Fig. 6 comporte, après découpage des flans de tôle 2 et 3 :
- A) une zone A de positionnement, d'accostage des flans de tôle 2 et 3 et mise en référence du plan de joint 4 desdits flans de tôle 2 et 3 dans l'axe du faisceau laser 1,
- B) une zone B de transfert vers le faisceau laser 1 des flans de tôles 2 et 3 et de maintien en référence desdits flans de tôle accostés,
- C) une zone C de soudage des flans de tôle 2 et 3,
- D) une zone D d'évacuation des flans de tôle 2 et 3 soudés.

Tout d'abord, la zone A comporte des moyens de support et de positionnement longitudinal des flans de tôle 2 qui sont formés par un tapis transporteur 80, notamment à billes, constituant une première surface de contact continue avec la face inférieure des flans de tôle 2.

Ce tapis transporteur 80 est juxtaposé à la chaîne inférieure 21a à patins articulés constituant une seconde surface de contact continue avec la face inférieure des flans de tôle 2 et se déplaçant longitudinalement en synchronisation avec le tapis transporteur 80.

Dans cette zone, la chaîne inférieure 21a à patins articulés est parallèle aux bords à souder des flans de tôle 2 et supporte une partie desdits flans de tôle 2 située à proximité du bord à souder et le tapis transporteur 80 supporte l'autre partie de ces flans de tôle 2.

Ce tapis transporteur 80 est muni de moyens de positionnement géométrique de chaque flan de tôle 2, disposés et adaptés selon la forme ou le profil géométrique du flan de tôle 2 correspondant.

Ces moyens peuvent être constitués par des butée en forme de baguettes, des ergots, des éléments en biais, des chevilles ou tout autre moyen connu pour positionner une pièce sur un tapis transporteur.

Dans l'exemple de réalisation représenté à la Fig. 6, ces moyens sont formés par des baguettes 81 fixées sur le tapis transporteur 80 et se déplaçant avec celui-ci.

La zone A comporte également des moyens de positionnement latéral du bord à souder des flans de tôle 2 qui sont formés par une butée longitudinale 82 constituant un guide, disposée verticalement pour que le plan passant par sa face latérale 82a située en regard de la chaîne inférieure 21a des patins articulés, soit confondue avec l'axe du faisceau laser 1.

Le tapis transporteur 80 peut être incliné par rapport à l'horizontal en direction de la chaîne inférieure 21a à patins articulés.

La zone A comporte aussi des moyens de maintien en référence longitudinale et latérale des flans de tôle 2 qui sont formés par l'amorce de la chaîne supérieure 21b à patins articulés constituant une surface de contact sensiblement continue avec la face supérieure des flans de tôle 2.

La chaîne supérieure 21b à patins articulés est disposée en regard de la chaîne inférieure 21a à patins articulés correspondante et est destinée à coopérer avec celle-ci pour déplacer les flans de tôle 2 par adhérence.

Dans la zone A, la chaîne supérieure 21b à patins articulés est parallèle aux bords à souder des flans de tôles 2.

Ainsi, les flans de tôle 2 posés sur le tapis transporteur 80, notamment à billes par des moyens appropriés non représentés, comme par exemple un robot manipulateur, sont déplacés longitudinalement par les baguettes 81 et glissent latéralement sur ledit tapis transporteur 80 de telle manière que le bord à souder de chaque flan de tôle 2 qui entre en contact avec la face latérale 82a de la butée 82 soit positionné dans l'axe du faisceau laser 1.

Le tapis transporteur 80 est prolongé par un autre tapis transporteur 83 horizontal constituant une surface de contact continue avec la face inférieure des flans de tôle 2.

Ce tapis transporteur 83 horizontal est juxtaposé à la chaîne inférieure 21a à patins articulés qui constitue une seconde surface de contact sensiblement continue avec la face inférieure des flans de tôle 2.

Le tapis transporteur 83 est par exemple un tapis à rouleaux montés libres en rotation ou un tapis à billes ou peut être un tapis roulant se déplaçant longitudinalement en synchronisation avec les chaînes 21a et 21b à patins articulés.

A la fin de la zone A, les flans de tôle 2 sont donc supportés par le tapis transporteur 83 et sont maintenus en référence et déplacés en direction du faisceau laser 1 par les chaînes à patins 21a et 21b à patins articulés entre lesquelles les flans de tôle 2 sont pincés.

La zone A comporte également des moyens de support et de positionnement longitudinal des flans de tôle 3 qui sont formés par un tapis transporteur 84, notamment à billes, constituant une première surface de contact continue avec la face inférieure des flans de tôle 3.

Ce tapis transporteur 84 est juxtaposé à la chaîne inférieure 61a à patins articulés constituant une seconde surface de contact sensiblement continue avec la face inférieure des flans de tôle 3 et se déplaçant longitudinalement en synchronisation avec le tapis transporteur 84.

La chaîne inférieure 61a à patins articulés supporte une partie des flans de tôle 3 située à proximité du bord à souder et le tapis transporteur 84 supporte l'autre partie desdits flans de tôle 3.

Le tapis transporteur 84 est muni de moyens de positionnement géométrique des flans de tôle 3, disposés et adaptés à la forme et au profil de ces flans de tôle 3.

Ces moyens peuvent être constitués par des butée en forme de baguette, des ergots, des éléments en biais, des chevilles ou tout autre moyen connu pour positionner une pièce sur un tapis transporteur.

Dans l'exemple de réalisation représenté à la Fig.6, ces moyens sont formés par des baguettes 85 fixées sur le tapis transporteur 84 et se déplaçant avec ce dernier.

Le tapis transporteur 84, notamment à billes, peut être incliné par rapport à l'horizontale en direction de la chaîne inférieure 61a à patins articulés.

La zone A comporte également des moyens de maintien en référence longitudinal et latéral des flans de tôle 3 qui sont formés par la chaîne supérieure 61b à patins articulés constituant une surface de contact sensiblement continue avec la face supérieure des flans de tôle 3.

La chaîne supérieure 61b à patins articulés est disposée en regard de la chaîne inférieure 61a à patins articulés et destinée à coopérer avec cette dernière pour déplacer les flans de tôle 3 par adhérence.

Dans la zone A, la chaîne supérieure 61b à patins articulés est parallèle aux bords à souder des flans de tôle 3.

Ainsi, les flans de tôle 3 posés sur le tapis transporteur 84 par des moyens appropriés non représentés, comme par exemple un robot manipulateur, sont déplacés par les baguettes 85 et glissent latéralement sur le tapis transporteur 84 de telle manière que le bord à souder de chaque flan de tôle 3 entre en contact avec le bord à souder de chaque flan de tôle 2 et soit, par conséquent, positionné dans l'axe du faisceau laser 1.

Le tapis transporteur 84 se prolonge par un tapis transporteur 86 horizontal et juxtaposé à la chaîne inférieure 61a à patins articulés et constitue une surface de contact continue avec la face inférieure des flans de tôle 3.

Le tapis transporteur 86 horizontal est par exemple un tapis à rouleaux montés libres en rotation ou un tapis à billes ou peut être un tapis roulant se déplaçant longitudinalement en synchronisation avec les chaînes 61a et 61b à patins articulés.

Les tapis transporteur 80 et 84 et les chaînes 21a, 21b, 61a et 61b à patins articulés se déplacent longitudinalement en synchronisation les uns avec les autres avec éventuellement les tapis transporteurs 83 et 86 dans le cas où ils sont constitués par des tapis roulants.

Par ailleurs, les tapis transporteurs 80 et 83 et les chaînes 21a et 21b coopérant avec les flans de tôle 2, et les tapis transporteurs 84 et 86 et les chaînes à patins 61a et 61b coopérant avec les flans de tôle 3 sont situés de part et d'autre du plan de joint 4 des flans de tôle 2 et 3.

Pendant leur transfert vers la zone B, les flans de tôle 2 reposent d'abord sur le tapis transporteur 80, puis sont pressés entre les chaînes 21a et 21b à patins articulés.

Il en est de même pour le transfert vers la zone B des flans de tôle 3 qui reposent d'abord sur le tapis transporteur 84 et sur la chaîne inférieure 61a à patins articulés, puis sont pressés entre les chaînes 61a et 61b à patins articulés.

Dans la zone B de transfert vers le faisceau laser 1 des flans de tôle 2 et 3 et de maintien en référence desdits flans de tôle 2 et 3 préalablement accostés dans la zone A, l'installation comporte, pour les flans de tôle 2, le tapis transporteur 83, les chaînes 21a et 21b à patins articulés et pour les flans de tôle 3, le tapis transporteur 86 et les chaînes 61a et 61b à patins articulés.

Il en est de même pour la zone C de soudage des flans de tôle 2 et 3 et pour la zone D d'évacuation desdits flans de tôle 2 et 3 soudés, dans lesquelles l'installation comporte, pour les flans de tôle 2, le tapis transporteur 83 et les chaînes 21a et 21b à patins articulés et, pour les flans de tôle 3, le tapis transporteur 86 et les chaînes 61a et 61b à patins articulés.

Dans l'exemple de réalisation représenté à la Fig. 6, les chaînes 21a, 21b et 61, 61b constituant les deux ensembles 20 et 60 de support et de transfert précédemment décrit, sont dans les zones B et C, orientées en direction du plan de joint 4 dans le sens de transfert des flans de tôle 2 et 3 pour exercer une pression latérale sur lesdits flans de tôles 2 et 3 l'un contre l'autre et en direction de leur bord à souder.

Chaque ensemble 20 et 60 de support et de transfert des flans de tôle 2 et 3 est muni de moyens de bridage sous effort vertical desdits flans de tôle 2 et 3 agissant sur les chaînes à patins articulés 21a, 21b et 61a, 61b à patins articulés dudit ensemble correspondant.

Ces moyens de bridage sont identiques à ceux précédemment décrits pour le dispositif de guidage et de transfert des flans de tôle 2 et 3.

Les tapis transporteurs 83 et 86 ainsi que les chaînes 21a et 21b et 61a, 61b peuvent également se prolonger dans la zone D d'évacuation des flans de tôle 2 et 3 soudés.

Dans cette zone D, lesdites chaînes 21a, 21b et 61a, 61b sont parallèles au plan de joint 4 des flans de tôle 2 et 3.

Cette zone D d'évacuation des flans de tôle 2 et 3 soudés peut comporter un tapis transporteur indépendant des tapis transporteurs 83 et 86 des zones précédentes.

Selon une variante dans les zones B et C, l'un des deux ensembles 20 et 60 de support et de transfert des flans de tôle 2 et 3 est orienté en direction du plan de joint 4 dans le sens de transfert de ces flans de tôle 2 et 3 et l'autre desdits ensembles 20 et 60 est parallèle au plan de joint 4 desdits flans de tôle 2 et 3.

Dans l'exemple de réalisation représenté à la Fig. 6, les chaînes 21a, 21b et 61a, 61b à patins articulés dans les zones A, B, C et D sont formées chacune par une chaîne continue à patins articulés.

Selon une variante, dans la zone A, les zones B et C et la zone D, les chaînes 21a, 21b et 61a, 61b à patins articulés peuvent être formées chacune par une chaîne indépendante à patins articulés.

## Revendications

1. Dispositif de guidage et de transfert d'au moins deux flans de tôle (2, 3) préalablement accostés bord à bord pour former un plan de joint (4), dans une installation de soudage en continu au moyen d'un faisceau laser (1), du type comprenant deux ensembles (20, 60) de support et de transfert des flans de tôle (2, 3) en direction du faisceau laser (1), disposés chacun de part et d'autre du plan de joint (4) et déplaçables en synchronisation l'un avec l'autre, chaque ensemble (20, 60) de support et de transfert étant formé, d'une part, d'une chaîne inférieure (21a, 61a) à patins articulés constituant une surface de contact sensiblement continue avec la face inférieure des flans de tôle (2, 3) correspondants et, d'autre part, d'une chaîne supérieure (21b, 61b) à patins articulés disposée en regard de la chaîne inférieure (21a, 61a) à patins articulés correspondante et destinée à coopérer avec cette dernière pour déplacer les flans de tôle (2, 3) par adhérence en direction du faisceau laser (1), caractérisé en ce qu'au moins un des deux ensembles (20, 60) de support et de transfert est orienté en oblique en direction du plan de joint (4) dans le sens de transfert des flans de tôle (2, 3) pour exercer une pression latérale sur lesdits flans de tôle (2, 3) l'un contre l'autre et en direction de leurs bords à souder.

2. Dispositif selon la revendication 1, caractérisé en ce que l'un des deux ensembles (20, 60) de support et de transfert est orienté en direction du plan de joint (4) dans le sens de transfert des flans de tôle (2, 3) et l'autre desdits ensemble (20, 60) est parallèle au plan de joint (4) desdits flans de tôle (2, 3).

3. Dispositif selon la revendication 1, caractérisé en ce que chacun des deux ensemble (20, 60) de support et de transfert est orienté en direction du plan de joint (4) des flans de tôle (2, 3).

4. Dispositif selon l'une des revendication 1 à 3, caractérisé en ce que chaque ensemble (20, 60) de support et de transfert est muni de moyens (26, 27, 66, 67) de bridage sous effort vertical des flans de tôle (2, 3) agissant sur les chaînes (21a, 21b, 61a, 61b) à patins articulés dudit ensemble correspondant.

5. Dispositif selon la revendication 4, caractérisé en ce que les moyens de bridage sont formés par des rouleaux (26, 66) supportant la chaîne inférieure (21a, 61a) à patins articulés correspondante, l'axe de rotation desdits rouleaux (26, 66) étant perpendiculaire au sens de déplacement de ladite chaîne inférieure (21a, 61a) à patins articulés et horizontal, et par des rouleaux d'appui (27, 67) de la chaîne supérieure (21b, 61b) à patins articulés correspondante, l'axe de rotation desdits rouleaux (27, 67) étant perpendiculaire au sens de déplacement de ladite chaîne supérieure (21b, 61b) à patins articulés correspondante et horizontal.

6. Dispositif selon la revendication 5, caractérisé en ce qu'au moins trois rouleaux (26, 27, 66, 67 ) sont en contact simultanément avec un patin (24a, 24b, 64a, 64b) de chaque chaîne (21a, 21b, 61a, 61b) à patins articulés.

7. Dispositif selon l'une des revendications précédentes, caractérisé en ce que chaque chaîne (21a, 21b, 61a, 61b) à patins articulés forme une boucle dans un plan perpendiculaire aux flans de tôle (2 et 3) et comporte des moyens d'entraînement en rotation.

8. Dispositif selon l'une des revendications précédentes, caractérisé en ce que chaque patin (24a, 24b, 64a, 64b) des chaînes (21a, 21b, 61a, 61b) à patins articulés comporte sur sa face en contact avec les flans de tôle (2, 3) correspondants une couche d'un matériau assurant un coefficient de frottement suffisant pour créer l'adhérence avec les flans de tôle correspondants, par exemple un polymère.

9. Dispositif selon l'une des revendications 1 à 3, caractérisé en ce qu'au moins un des deux ensembles (20, 60) de support et de transfert comporte des moyens supplémentaires (30a, 30b, 70a, 70b) de maintien en référence selon un plan vertical des bords à souder des flans de tôle (2, 3).

10. Dispositif selon la revendication 9, caractérisé en ce que les moyens supplémentaires de maintien en référence selon un plan de référence vertical des bords à souder des flans de tôle (2, 3) sont formés par deux chemins de guidage (30a, 30b et/ou 70a, 70b) latéral, parallèle et disposé de part et d'autre du plan horizontal de déplacement des flans de tôle (2, 3), chaque chemin de guidage (30a, 30b et/ou 70a, 70b) coopérant avec une surface latérale (29a, 29b et/ou 69a, 69b) des patins (24a, 24b et/ou 64a, 64b) des chaînes (21a, 21b et/ou 61a, 61b) à patins articulés.

11. Installation de soudage bord à bord en continu d'au moins deux flans de tôle au moyen d'un faisceau laser (1), du type comportant :
- une zone A d'accostage des flans de tôle (2 et 3) et de mise en référence du plan de joint (4) desdits flans de tôle (2, 3) dans l'axe du faisceau laser (1),
- une zone B de transfert vers le faisceau laser (1) des flans de tôles (2, 3) et de maintien en référence desdits flans de tôle (2, 3) accostés,
- une zone C de soudage desdits flans de tôle (2, 3),
- une zone D d'évacuation des flans de tôle (2, 3) soudés,
caractérisée en ce que la zone B de transfert et de maintien en référence des flans de tôle (2, 3) accostés et la zone C de soudage comportent le dispositif selon l'une des revendications 1 à 10.

12. Installation selon la revendication 11, caractérisée en ce que la zone A d'accostage des flans de tôle (2, 3) et de mise en référence du plan de joint (4) desdits flans de tôle (2, 3) comporte deux ensembles (20, 60) de support et de transfert des flans de tôle (2, 3) en direction du faisceau laser (1), disposés chacun de part et d'autre du plan de joint (4) et déplaçables en synchronisation l'un avec l'autre, chacun desdits ensemble (20, 60) étant formé de deux chaînes (21a, 21b et 61a, 61b) à patins articulés, l'une (21a, 61a) inférieure et l'autre (21b, 61b) supérieure, lesdites chaînes (21a, 21b, 61a, 61b) à patins articulés étant parallèles au plan de joint (4) desdits flans de tôle (2, 3).

13. Installation selon la revendication 11, caractérisée en ce que la zone d'évacuation D des flans de tôle (2, 3) soudés comporte deux ensembles (20, 60) de support et de transfert des flans de tôle (2, 3) en direction du faisceau laser (1) disposés chacun de part et d'autre du plan de joint (4) et déplaçables en synchronisation l'un avec l'autre, chacun desdits ensembles (20, 60) étant formé de deux chaînes (21a, 21b, 61a, 61b) à patins articulés, l'une (21a, 61a) inférieure et l'autre (21b, 61b) supérieure, lesdites chaînes (21a, 21b, 61a, 61b) à patins articulés étant parallèles au plan de joint (4) desdits flans de tôles (2, 3).

14. Installation selon les revendications 11, 12 et 13, caractérisée en ce que les chaînes (21a, 21b, 61a, 61b) à patins articulés dans lesdites zones A, B, C et D sont formées chacune par une chaîne (21a, 21b, 61a, 61b) continue à patins articulés.

## Claims

1. A device for guiding and transferring at least two metal sheets (2, 3), previously placed edge-to-edge to form a joining plane (4), in a continuous welding installation using a laser beam (1) of the type comprising two assemblies (20, 60) for supporting and transferring the metal sheets (2, 3) in the direction of the laser beam (1), arranged on either side of the joining plane (4) and movable in synchronisation with one another, each supporting and transferring assembly (20, 60) being formed, on the one hand, by a lower chain (21a, 61a) having articulated plates constituting a substantially continuous contact surface with the lower face of the corresponding metal sheets (2, 3) and, on the other hand, an upper chain (21b, 61b) having articulated plates arranged facing the corresponding lower chain (21a, 61a) having articulated plates and intended to cooperate with the latter in order to move the metal sheets (2, 3) by static friction in the direction of the laser beam (1), characterized in that at least one of the two supporting and transferring assemblies (20, 60) is oriented obliquely in the direction of the joining plane (4) in the transfer direction of the metal sheets (2, 3) in order to exert a lateral pressure on the metal sheets (2, 3), one against the other and in the direction of their edges to be welded.

2. A device according to claim 1, characterised in that one of the two supporting and transferring assemblies (20, 60) is oriented in the direction of the joining plane (4) in the transfer direction of the metal sheets (2, 3) and the other assembly (20, 60) is parallel to the joining plane (4) of the metal sheets (2, 3).

3. A device according to claim 1, characterised in that each of the two supporting and transferring assemblies (20, 60) is oriented in the direction of the joining plane (4) of the metal sheets (2, 3).

4. A device according to one of claims 1 to 3, characterised in that each supporting and transferring assembly (20, 60) is equipped with means (26, 27, 66, 67) of flanging the metal sheets (2, 3) under a vertical force acting on the chains (21a, 21b, 61a, 61b) having articulated plates of the corresponding assembly.

5. A device according to claim 4, characterised in that the flanging means are formed by rollers (26, 66) supporting the corresponding lower chain (21a, 61a) having articulated plates, the axis of rotation of the rollers (26, 66) being perpendicular to the direction of movement of the lower chain (21a, 61a) having articulated plates and horizontal, and by supporting rollers (27, 67) for the corresponding upper chain (21b, 61b) having articulated plates, the axis of rotation of the rollers (27, 67) being perpendicular to the direction of movement of the corresponding upper chain (21b, 61b) having articulated plates and horizontal.

6. A device according to claim 5, characterised in that at least three rollers (26, 27, 66, 67) are simultaneously in contact with a plate (24a, 24b, 64a, 64b) of each chain (21a, 21b, 61a, 61b) having articulated plates.

7. A device according to one of the preceding claims, characterised in that each chain (21a, 21b, 61a, 61b) having articulated plates forms a loop in a plane perpendicular to the metal sheets (2 and 3) and comprises means of driving in rotation.

8. A device according to one of the preceding claims, characterised in that each plate (24a, 24b, 64a, 64b) of the chains (21a, 21b, 61a, 61b) having articulated plates comprises, on its face in contact with the corresponding metal sheets (2, 3), a layer of a material guaranteeing a friction coefficient sufficient to create the static friction with the corresponding metal sheets, for example a polymer.

9. A device according to one of claims 1 to 3, characterized in that at least one of the two supporting and transferring assemblies (20, 60) comprises additional means (30a, 30b, 70a, 70b) of holding the edges of the metal sheets (2, 3) to be welded referenced along a vertical plane.

10. A device according to claim 9, characterised in that the additional means of holding the edges of the metal sheets (2, 3) to be welded referenced along a vertical plane are formed by two lateral guiding paths (30a, 30b and/or 70a 70b) which are parallel and arranged on either side of the horizontal plane of movement of the metal sheets (2, 3), each guiding path (30a, 30b and/or 70a, 70b) cooperating with a lateral surface (29a, 29b and/or 69a, 69b) of the plates (24a, 24b and/or 64a, 64b) of the chains (21a, 21b and/or 61a, 61b) having articulated plates.

11. An installation for continuous edge-to-edge welding of at least two metal sheets by means of a laser beam (1), of the type comprising:
- a zone A for bringing together the metal sheets (2 and 3) and for referencing the joining plane (4) of the metal sheets (2, 3) in the axis of the laser beam (1),
- a zone B for transferring the metal sheets (2, 3) to the laser beam (1) and for holding referenced the brought-together metal sheets (2, 3),
- a zone C for welding the metal sheets (2, 3),
- a zone D for removing the welded metal sheets (2, 3),
characterised in that the zone B for transferring and holding referenced the brought-together metal sheets (2, 3) and the welding zone C contain the device according to one of claims 1 to 10.

12. An installation according to claim 11, characterised in that that the zone A for bringing together the metal sheets (2, 3) and for referencing the joining plane (4) of the metal sheets (2, 3) comprises two assemblies (20, 60) for supporting and transferring the metal sheets (2, 3) in the direction of the laser beam (1), arranged on either side of the joining plane (4) and movable in synchronisation with one another, each assembly (20, 60) being formed by two chains (21a, 21b and 61a, 61b) having articulated plates, the lower (21a, 61a) and the upper (21b, 61b), the chains (21a, 21b, 61a, 61b) having articulated plates being parallel to the joining plane (4) of the metal sheets (2, 3).

13. An installation according to claim 11, characterized in that the zone D for removing the welded metal sheets (2, 3) contains two assemblies (20, 60) for supporting and transferring the metal sheets (2, 3) in the direction of the laser beam (1), arranged on either side of the joining plane (4) and movable in synchronisation with one another, each assembly (20, 60) being formed by two chains (21a, 21b, 61a, 61b) having articulated plates, the lower (21a, 61a) and the upper (21b, 61b), the chains (21a, 21b, 61a, 61b) having articulated plates being parallel to the joining plane (4) of the metal sheets (2, 3).

14. An installation according to claims 11, 12 and 13, characterised in that the chains (21a, 21b, 61a, 61b) having articulated plates in the zones A, B, C and D are each formed by a continuous chain (21a, 21b, 61a, 61b) having articulated plates.

## Patentansprüche

1. Vorrichtung zum Führen und Fördern von mindestens zwei Blechplatten (2, 3), welche zuvor zur Ausbildung einer Verbindungsebene (4) Seite an Seite gelegt worden sind, in einer Durchlauf-Schweißanlage mit einem Laserstrahl (1), mit zwei Einrichtungen (20, 60) zum Lagern und Fördern der Blechplatten (2, 3) in Richtung des Laserstrahls (1), die beiderseits der Verbindungsebene (4) angeordnet und synchron miteinander verschieblich sind, wobei jede Einrichtung (20, 60) zum Lagern und Fördern einerseits aus einer unteren Kette (21a, 61a) mit Gelenkgliedern gebildet ist, welche eine Kontaktoberfläche bilden, die mit der unteren Fläche der entsprechenden Blechplatten (2, 3) gleichmäßig fortläuft, und andererseits aus einer oberen Kette (21b, 61b) mit Gelenkgliedern gebildet ist, welche bezüglich der entsprechenden unteren Kette (21a, 61a) mit Gelenkgliedern ausgerichtet ist und zum Zusammenwirken mit der letzteren zur Verschiebung der Blechplatten (2, 3) durch Reibung in Richtung des Laserstrahls (1) dient, dadurch gekennzeichnet, daß mindestens eine der zwei Einrichtungen (20, 60) zum Lagern und Fördern schräg in Richtung der Verbindungsebene (4) im Sinn der Förderung der Blechplatten (2, 3) zum Ausüben eines seitlichen Drucks auf die Blechplatten (2, 3) gegeneinander und in Richtung ihrer zu verschweißenden Seiten orientiert ist.

2. Vorrichtung nach Anspruch 1, dadurch gekennzeichnet, daß die eine der zwei Einrichtungen (20, 60) zum Lagern und Fördern in Richtung der Verbindungsebene (4) im Sinn der Förderung der Blechplatten (2, 3) und die andere Einrichtung (20, 60) parallel zur Verbindungsebene (4) der Blechplatten (2, 3) orientiert ist.

3. Vorrichtung nach Anspruch 1, dadurch gekennzeichnet, daß jede der zwei Einrichtungen (20, 60) zum Lagern und Fördern in Richtung der Verbindungsebene (4) der Blechplatten (2, 3) orientiert ist.

4. Vorrichtung nach einem der Ansprüche 1 bis 3, dadurch gekennzeichnet, daß jede Einrichtung (20, 60) zum Lagern und Fördern mit einer Spanneinrichtung (26, 27, 66, 67) ausgestattet ist, welche unter vertikaler Belastung der Blechplatten (2, 3) steht, die auf die Ketten (21a, 21b, 61a, 61b) mit den Gelenkgliedern der entsprechenden Einrichtung wirkt.

5. Vorrichtung nach Anspruch 4, dadurch gekennzeichnet, daß die Spanneinrichtung durch Rollen (26, 66) gebildet ist, die die entsprechende untere Kette (21a, 61a) mit den Gelenkgliedern lagern, wobei die Drehachse der Rollen (26, 66) senkrecht im Sinn der Verschiebung der unteren Kette (21a, 61a) mit den Gelenkgliedern und horizontal verläuft, und durch Stützrollen (27, 67) der entsprechenden oberen Kette (21b, 61b) mit den Gelenkgliedern gebildet ist, wobei die Drehachse der Rollen (27, 67) senkrecht im Sinne der Verschiebung der entsprechenden oberen Kette (21b, 61b) mit den Gelenkgliedern und horizontal verläuft.

6. Vorrichtung nach Anspruch 5, dadurch gekennzeichnet, daß mindestens drei Rollen (26, 27, 66, 67) gleichzeitig in Kontakt mit einem Glied (24a, 24b, 64a, 64b) jeder Kette (21a, 21b, 61a, 61b) mit Gelenkgliedern stehen.

7. Vorrichtung nach einem der vorangehenden Ansprüche, dadurch gekennzeichnet, daß jede Kette (21a, 21b, 61a, 61b) mit Gelenkgliedern eine Schleife in einer senkrecht zu den Blechplatten (2, 3) stehenden Ebene bildet und eine Antriebseinrichtung zur Drehung aufweist.

8. Vorrichtung nach einem der vorangehenden Ansprüche, dadurch gekennzeichnet, daß jedes Glied (24a, 24b, 64a, 64b) der Ketten (21a, 21b, 61a, 61b) mit den Gelenkgliedern auf seiner in Kontakt mit den entsprechenden Blechplatten (2, 3) stehenden Fläche einen Überzug aus einem Material trägt, welches einen ausreichenden Reibungskoeffizienten zur Erzeugung der Reibung mit den entsprechenden Blechplatten gewährleistet, beispielsweise ein Polymer.

9. Vorrichtung nach einem der Ansprüche 1 bis 3, dadurch gekennzeichnet, daß mindestens eine der zwei Einrichtungen (20, 60) zum Halten und Fördern eine zusätzliche Einrichtung (30a, 30b, 70a, 70b) zum Halten der zu verschweißenden Seiten der Blechplatten (2, 3) in Bezug auf eine vertikale Ebene aufweist.

10. Vorrichtung nach Anspruch 9, dadurch gekennzeichnet, daß die zusätzliche Einrichtung zum Halten der zu verschweißenden Seiten der Blechplatten (2, 3) in Bezug auf die vertikale Referenzebene durch zwei seitliche parallele Führungswege (30a, 30b und/oder 70a, 70b) gebildet ist, welche beiderseits der horizontalen Ebene der Verschiebung der Blechplatten (2, 3) angeordnet sind, wobei jeder Führungsweg (30a, 30b und/oder 70a, 70b) mit einer seitlichen Oberfläche (29a, 29b und/oder 69a, 69b) der Glieder (24a, 24b und/oder 64a, 64b) der Ketten (21a, 21b und/oder 61a, 61b) mit den Gelenkgliedern zusammenwirkt.

11. Durchlauf-Schweißanlage zum Verschweißen von mindestens zwei seitlich ausgerichtete Blechplatten mit einem Laserstrahl (1), welche aufweist:
- eine Zone A zum Anlegen der Blechplatten (2, 3) aneinander und zum Inbezugsetzen der Verbindungsebene (4) der Blechplatten (2, 3) auf die Achse des Laserstrahls (1);
- eine Zone B zum Fördern der Blechplatten (2, 3) zum Laserstrahl (1) und zum Inbezughalten der angelegten Blechplatten (2,3);
- eine Zone C zum Verschweißen der Blechplatten (2, 3);
- eine Zone D zum Entnehmen der verschweißten Blechplatten (2, 3);
dadurch gekennzeichnet,
daß die Zone B zum Fördern und zum Inbezughalten der angelegten Blechplatten (2, 3) und die Zone C zum Verschweißen eine Vorrichtung gemäß einem der Ansprüche 1 bis 10 aufweisen.

12. Schweißanlage nach Anspruch 11, dadurch gekennzeichnet, daß die Zone A zum Anlegen der Blechplatten (2, 3) aneinander und zum Inbezugsetzen der Verbindungsebene (4) der Blechplatten (2, 3) zwei Einrichtungen (20, 60) zum Lagern und Fördern der Blechplatten (2, 3) in Richtung des Laserstrahls (1) aufweist, welche beiderseits der Verbindungsebene (4) angeordnet sind und synchron miteinander verschieblich sind, wobei jede der Einrichtungen (20, 60) aus zwei Ketten (21a, 21b und 61a, 61b) mit Gelenkgliedern gebildet ist, und zwar aus einer unteren (21a, 61a) und einer oberen (21b, 61b), wobei die Ketten (21a, 21b, 61a, 61b) mit den Gelenkgliedern parallel zur Verbindungsebene (4) der Blechplatten (2, 3) verlaufen.

13. Anlage nach Anspruch 11, dadurch gekennzeichnet, daß die Zone D zum Entnehmen der verschweißten Blechplatten (2, 3) zwei Einrichtungen (20, 60) zum Lagern und Fördern der Blechplatten (2, 3) in Richtung des Laserstrahls (1) aufweist, welche beiderseits der Verbindungsebene (4) angeordnet sind und synchron miteinander verschieblich sind, wobei jede der Einrichtungen (20, 60) aus zwei Ketten (21a, 21b, 61a, 61b) mit Gelenkgliedern gebildet ist, und zwar aus eine unteren (21a, 61a) und einer (21b, 61b) oberen, wobei die Ketten (21a, 21b, 61a, 61b) mit den Gelenkgliedern parallel zur Verbindungsebene (4) der Blechplatten (2, 3) verlaufen.

14. Anlage nach einem der Ansprüche 11, 12 und 13, dadurch gekennzeichnet, daß die Ketten (21a, 21b, 61a, 61b) mit den Gelenkgliedern in den Zonen A, B, C und D alle durch eine fortlaufende Kette (21a, 21b, 61a, 61b) mit Gelenkgliedern gebildet sind.
